# EUROPÄISCHE PATENTSCHRIFT

(11) **EP 3 526 649 B1**
(45) Veröffentlichungstag und Bekanntmachung des Hinweises auf die Patenterteilung: **29.06.2022**
(21) Anmeldenummer: 17787139.9
(22) Anmeldetag: 09.10.2017
(51) Int. Cl.: G05B 23/02

(54) **VERFAHREN UND STEUEREINHEIT ZUR ÜBERWACHUNG EINES HERSTELLUNGSPROZESSES EINER NAHRUNGSMITTEL-MASSE**
METHOD AND CONTROL UNIT FOR MONITORING A MANUFACTURING PROCESS FOR A FOOD MASS
PROCÉDÉ ET UNITÉ DE COMMANDE POUR SURVEILLER UN PROCESSUS DE PRODUCTION D'UNE MASSE ALIMENTAIRE

(30) Priorität: 13.10.2016 DE 102016219972
(43) Veröffentlichungstag der Anmeldung: 21.08.2019
(73) Patentinhaber: BSH Hausgeräte GmbH, 81739 München (DE)
(72) Erfinder: POST, Hendrik, 71638 Ludwigsburg (DE)
(86) Internationale Anmeldenummer: PCT/EP2017/075690
(87) Internationale Veröffentlichungsnummer: WO 2018/069253

(56) Entgegenhaltungen:
- US-A1- 2016 241 653

## Beschreibung

Die Erfindung betrifft eine Steuereinheit für eine Küchenmaschine bzw. für ein Küchengerät und ein entsprechendes Verfahren zur Analyse bzw. zur Überwachung eines Herstellungsprozess einer Nahrungsmittel-Masse (z.B. eines Teigs).

Ein Küchengerät, insbesondere eine Küchenmaschine kann von einem Nutzer dazu verwendet werden, eine Nahrungsmittel-Masse zuzubereiten. Dabei kann eine Küchenmaschine z.B. eine integrierte Waage umfassen bzw. ein Küchengerät kann als Waage ausgebildet sein, um den Nutzer beim Abwiegen der unterschiedlichen Zutaten für die Herstellung einer Nahrungsmittel-Masse zu unterstützen. Des Weiteren kann eine Küchenmaschine Mischmittel mit einem Mischwerkzeug (z.B. einem Knethaken, einem Rührbesen, einem Messer, etc.) umfassen, um aus den Zutaten die Nahrungsmittel-Masse zu erzeugen.

US 2016/241653 A1 beschreibt einen Mixer, der eingerichtet ist, Zutaten zu bestimmen, die in den Mixer gegeben werden.

Das vorliegende Dokument befasst sich mit der technischen Aufgabe, ein Verfahren und eine Steuereinheit für ein Küchengerät, insbesondere für eine Küchenmaschine, bereitzustellen, durch die eine zuverlässige und automatische Überwachung und/oder Analyse des Herstellungsprozesses einer Nahrungsmittel-Masse ermöglicht wird, insbesondere um einen Nutzer eines Küchengeräts bzw. einer Küchenmaschine bei der Herstellung einer Nahrungsmittel-Masse zu unterstützen.

Die Aufgabe wird durch den Gegenstand der unabhängigen Patentansprüche gelöst. Vorteilhafte Ausführungsformen sind insbesondere in den abhängigen Patentansprüchen definiert, in nachfolgender Beschreibung beschrieben oder in der beigefügten Zeichnung dargestellt.

Gemäß einem Aspekt der Erfindung wird ein Verfahren zur Überwachung eines Herstellungsprozesses einer Nahrungsmittel-Masse beschrieben. Insbesondere wird im Kontext des Verfahrens Information in Bezug auf verwendete Zutaten zur Herstellung einer Nahrungsmittel-Masse ermittelt. Diese Information kann dazu verwendet werden, um den Herstellungsprozess zu überwachen und/oder um einen Nutzer einer Küchenmaschine bzw. eines Küchengeräts über den Herstellungsprozess zu informieren. Das Verfahren kann z.B. von einer Steuereinheit einer Küchenmaschine bzw. eines Küchengeräts ausgeführt werden. Es handelt sich somit um ein Maschinenimplementiertes Verfahren.

Das Verfahren umfasst das Erfassen eines zeitlichen Verlaufs von Messdaten während des Herstellungsprozesses. Dabei zeigen die Messdaten zumindest eine Eigenschaft (insbesondere das Gewicht und/oder eine Widerstandskraft) der Nahrungsmittel-Masse in dem Behälter des Küchengeräts (insbesondere der Küchenmaschine) an. Insbesondere kann der zeitliche Verlauf von Messdaten Information in Bezug auf einen zeitlichen Verlauf des Gewichts der Nahrungsmittel-Masse während des Herstellungsprozesses anzeigen. Mit anderen Worten, der zeitliche Verlauf von Messdaten kann einen zeitlichen Verlauf von Gewichtsdaten umfassen. Die Gewichtsdaten können z.B. anhand einer Waage und ggf. anhand eines Vibrationssensors des Küchengeräts bzw. der Küchenmaschine ermittelt werden.

Eine Zutat wird typischerweise aus einer gewissen Entfernung bzw. aus einer gewissen Höhe in den Behälter gegeben. Als Folge daraus weist die Zutat bei Erreichen des Bodens des Behälters eine bestimmte kinetische Energie auf. Diese kinetische Energie führt typischerweise zu Vibrationen des Behälters und zu Schwankungen des von einer Waage erfassten Gewichts. Die Gewichtsdaten können diese zeitlichen Schwankungen des Gewichts als einen zeitlichen Verlauf des erfassten Gewichts umfassen. Des Weiteren können mittels eines Vibrationssensors Vibrationsdaten bereitgestellt werden, die einen zeitlichen Verlauf von Vibrationen an dem Behälter umfassen. Der zeitliche Verlauf von Messdaten kann somit Information in Bezug auf einen zeitlichen Verlauf von Vibrationen anzeigen, die durch die Nahrungsmittel-Masse, insbesondere durch Zugabe einer Zutat in den Behälter, verursacht werden. Typischerweise klingen die Schwankungen des Gewichts bzw. die Vibrationen des Behälters mit der Zeit ab. Die Eigenschaften der Schwankungen bzw. der Vibrationen (inkl. dem Abklingverhalten) hängen typischerweise von der Zutat ab, die in den Behälter gegeben wurde.

Alternativ oder ergänzend kann der zeitliche Verlauf von Messdaten Information in Bezug auf einen zeitlichen Verlauf der Widerstandskraft anzeigen, die während des Herstellungsprozesses von der Nahrungsmittel-Masse an einem Mischwerkzeug einer Küchenmaschine bewirkt wird. Mit anderen Worten, der zeitliche Verlauf von Messdaten kann einen zeitlichen Verlauf von Widerstandsdaten umfassen. Die Widerstandsdaten können die Viskosität der Nahrungsmittel-Masse anzeigen. Die Widerstandsdaten können auf Basis der elektrischen Leistung ermittelt werden, die für den Antrieb des Mischwerkzeugs erforderlich ist. Alternativ oder ergänzend können die Widerstandsdaten mit einem Kraftsensor der Küchenmaschine ermittelt werden.

Das Verfahren umfasst außerdem das Bestimmen, auf Basis des zeitlichen Verlaufs von Messdaten, von Information in Bezug auf zumindest eine Zutat, die während des Herstellungsprozesses in den Behälter gegeben wurde. Insbesondere wird anhand des zeitlichen Verlaufs von Messdaten Information in Bezug auf zumindest eine Zutat erfasst, die in einem Zeitraum in den Behälter gegeben wurde, für den auch der zeitliche Verlauf von Messdaten erfasst wurde. Die Information in Bezug auf die zumindest eine Zutat kann z.B. umfassen: einen Typ einer Zutat (z.B. Mehl, Zucker, Eier, Milch, Eischaum, etc.), die während des Herstellungsprozesses in den Behälter gegeben wurde; eine Wahrscheinlichkeit, mit der der Typ einer Zutat erkannt wurde; eine Menge einer Zutat, die während des Herstellungsprozesses in den Behälter gegeben wurde und/oder eine Reihenfolge, in der während des Herstellungsprozesses Zutaten in den Behälter gegeben wurden.

Die Information in Bezug auf die zumindest eine Zutat und/oder eine davon abgeleitete Information können dann an einen Nutzer des Küchengeräts (insbesondere der Küchenmaschine) ausgegeben werden (z.B. über eine Nutzerschnittstelle des Küchengeräts und/oder auf einem persönlichen elektronischen Gerät eines Nutzers).

Das Verfahren ermöglicht es, durch die Auswertung des zeitlichen Verlaufs von Messdaten während eines Herstellungsprozesses in zuverlässiger und automatischer Weise Information in Bezug auf eine zugefügte Zutat zu bestimmen. Diese Information kann dazu verwendet werden, einen Nutzer bei der Herstellung einer Nahrungsmittel-Masse (z.B. bei der Herstellung eines Teigs) zu unterstützen. Dabei können insbesondere der Gradient des zeitlichen Verlaufs von Messdaten und insbesondere der zeitliche Verlauf des Gradienten des zeitlichen Verlaufs von Messdaten ausgewertet werden, um die Information in Bezug auf eine zugefügte Zutat zu bestimmen. Des Weiteren eine Frequenzanalyse zumindest eines Segments des zeitlichen Verlaufs von Messdaten durchgeführt, um Information in Bezug auf eine zugefügte Zutat zu bestimmen.

Insbesondere kann durch eine geeignete Zeit-Frequenz Transformation (z.B. eine Fourier Transformation) ein Frequenzspektrum (eines Segments) des zeitlichen Verlaufs von Messdaten ermittelt werden. Die Information in Bezug auf eine zugefügte Zutat kann dann auf Basis des Frequenzspektrums bestimmt werden.

Das Verfahren kann umfassen, das Aufteilen des zeitlichen Verlaufs von Messdaten in eine Mehrzahl von zeitlichen Segmenten, so dass die Mehrzahl von Segmenten zumindest ein Zugabe-Segment umfasst, in dem eine Zugabe einer Zutat zu dem Behälter erfolgt ist, und so dass die Mehrzahl von Segmenten zumindest ein Pausen-Segment umfasst, in dem keine Zutat zu dem Behälter gegeben wurde. Zu diesem Zweck kann die zeitliche Veränderung (d.h. der Gradient) des zeitlichen Verlaufs von Messdaten betrachtet werden. Ein Segment, in dem sich die Messdaten über einen bestimmten Mindestzeitraum hinweg nicht substantiell ändern, kann als Pausen-Segment betrachtet werden. Anderseits zeigt eine Änderungen des zeitlichen Verlaufs von Messdaten (d.h. ein Gradient, der betraglich über einem bestimmten Gradienten-Schwellenwert liegt) typischerweise die Zugabe einer Zutat an.

Es können somit ein oder mehrere Zugabe-Segmente identifiziert werden, in denen (wahrscheinlich) die Zugabe einer Zutat erfolgt ist. Die Information in Bezug auf die zumindest eine Zutat kann dann (nur) auf Basis des zumindest einen Zugabe-Segments bestimmt werden. So kann die Genauigkeit der ermittelten Information erhöht werden. Wie oben dargelegt kann die Information in Bezug auf die zumindest eine Zutat einen Typ von Zutat aus einer Vielzahl von unterschiedlichen Typen von Zutaten umfassen. Das zumindest eine Zugabe-Segment des zeitlichen Verlaufs von Messdaten kann dann analysiert werden (insbesondere kann der Verlauf des Gradienten im Zugabe-Segment analysiert werden), um zu bestimmen, welcher Typ von Zutat während des zumindest einen Zugabe-Segments in den Behälter gegeben wurde. Beispielsweise kann ermittelt werden, ob Mehl, Zucker, Milch, Wasser oder ein Ei in den Behälter gegeben wurde. Dies kann z.B. anhand eines statistischen Modells, anhand von Mustererkennung und/oder anhand eines Maschinen-erlernten Klassifikators erfolgen. Der ermittelte Typ von Zutat kann dann angezeigt und/oder mit Soll-Daten aus einem Rezept verglichen werden, um den Herstellungsprozess zu überwachen.

Das Verfahren kann das Ermitteln eines Wertes eines Merkmalsvektors für ein zeitliches Segment (insbesondere eines Zugabe-Segments) des zeitlichen Verlaufs von Messdaten umfassen. Der Merkmalsvektor umfasst dabei eine Mehrzahl von Merkmalen, wobei die Merkmale jeweils auf Basis des zeitlichen Segments des zeitlichen Verlaufs von Messdaten ermittelt werden, um unterschiedliche Eigenschaften des zeitlichen Verlaufs von Messdaten in dem zeitlichen Segment zu beschreiben. Beispielsweise können die Merkmale umfassen: einen (ggf. mittleren) Gradienten des zeitlichen Verlaufs von Messdaten in dem zeitlichen Segment; ein Ausmaß an Änderungen des Gradienten des zeitlichen Verlaufs von Messdaten in dem zeitlichen Segment; eine Differenz eines Wertes der Messdaten am Anfang und am Ende des zeitlichen Segments und/oder eine Häufigkeit von Änderungen des Gradienten des zeitlichen Verlaufs von Messdaten in dem zeitlichen Segment. Des Weiteren umfassen die Merkmale eine Eigenschaft eines Frequenzspektrums des zeitlichen Verlaufs von Messdaten in dem zeitlichen Segment. Beispielhafte Eigenschaften des Frequenzspektrums sind die Energien ein oder mehrere Frequenzanteile.

Der Typ einer Zutat, die in dem zeitlichen Segment in den Behälter gegeben wurde, kann dann in zuverlässiger und robuster Weise auf Basis eines Klassifikators und auf Basis des Wertes des Merkmalsvektors ermittelt werden. Dabei ist der Klassifikator eingerichtet, einen Merkmalsraum von möglichen Werten des Merkmalsvektors auf die Vielzahl von unterschiedlichen Typen von Zutaten aufzuteilen. Der Klassifikator kann insbesondere einen Maschinen-erlernten Klassifikator umfassen, z.B. ein neuronales Netzwerk und/oder eine Support Vector Machine. Des Weiteren kann der Klassifikator auf Basis von Trainingsdaten aus tatsächlichen Herstellungsprozessen angelernt worden sein. Alternativ oder ergänzend zu der Verwendung eines Klassifikators kann das Bestimmen von Information in Bezug auf zumindest eine Zutat das Erkennen eines typischen Musters für einen bestimmten Typ von Zutat in einem zeitlichen Segment des zeitlichen Verlaufs von Messdaten umfassen. Die Verwendung von Mustererkennungsalgorithmen ermöglicht die präzise Ermittlung von Information in Bezug auf zumindest eine Zutat, die in dem Zeitraum zugeführt wurde, für den der zeitliche Verlauf von Messdaten erfasst wurde. Das Verfahren kann weiter umfassen, das Ermitteln eines Rezeptes für den Herstellungsprozess der Nahrungsmittel-Masse. Beispielsweise kann das Rezept von einem Nutzer des Küchengeräts (insbesondere der Küchenmaschine) ausgewählt werden. Alternativ oder ergänzend kann das Rezept auf Basis der Information in Bezug auf die zumindest eine geführte Zutat ermittelt werden.

Das Verfahren kann weiter das Vergleichen der Information in Bezug auf die zumindest eine Zutat mit dem Rezept umfassen. Es kann dann in Abhängigkeit von dem Vergleich eine Rückmeldung an einen Nutzer des Küchengeräts (insbesondere der Küchenmaschine) ausgegeben werden. So kann ein Nutzer z.B. frühzeitig auf Fehler im Herstellungsprozess der Nahrungsmittel-Masse hingewiesen werden.

Des Weiteren kann die Information in Bezug auf die zumindest eine Zutat auch in Abhängigkeit von dem Rezept bestimmt werden (z.B. in Abhängigkeit von den in dem Rezept vorgesehenen Typen von Zutaten). So kann die Genauigkeit der ermittelten Information weiter erhöht werden.

Wie bereits oben dargelegt können die Messdaten Widerstandsdaten in Bezug auf eine Widerstandskraft umfassen, die von der Nahrungsmittel-Masse an einem Mischwerkzeug einer Küchenmaschine bewirkt wird. Dabei kann die Küchenmaschine eingerichtet sein, unterschiedliche Typen von Mischwerkzeugen (z.B. einen Knethaken, einen Rührbesen, ein Messer, etc.) aufzunehmen. Das Verfahren kann umfassen, das Ermitteln des Typs von Mischwerkzeug, das im Herstellungsprozess der Nahrungsmittel-Masse verwendet wird. Die Information in Bezug auf die zumindest eine Zutat kann dann auch in Abhängigkeit von dem Typ des verwendeten Mischwerkzeugs bestimmt werden. So kann die Genauigkeit der ermittelten Information in Bezug auf die zumindest eine Zutat weiter erhöht werden.

Gemäß einem weiteren Aspekt der Erfindung wird eine Steuereinheit für ein Küchengerät (insbesondere für eine Küchenmaschine) beschrieben. Die Steuereinheit ist eingerichtet, während eines Herstellungsprozesses einer Nahrungsmittel-Masse (z.B. eines Teigs) in einem Behälter des Küchengeräts einen (kontinuierlichen und typischerweise stetigen) zeitlichen Verlauf von Messdaten zu ermitteln. Dabei kann der zeitliche Verlauf von Messdaten einen bestimmten Zeitraum des Herstellungsprozess abdecken. Die Messdaten zeigen zumindest eine Eigenschaft der Nahrungsmittel-Masse in dem Behälter des Küchengeräts an. Die Steuereinheit ist weiter eingerichtet, auf Basis des zeitlichen Verlaufs von Messdaten, insbesondere auf Basis des (ggf. zeitabhängigen) Gradienten des zeitlichen Verlaufs von Messdaten, Information in Bezug auf zumindest eine Zutat zu ermitteln, die während des Herstellungsprozesses (insbesondere während des bestimmten Zeitraums) in den Behälter gegeben wurde.

Gemäß einem weiteren Aspekt der Erfindung wird ein Küchengerät, insbesondere eine Küchenmaschine zur Herstellung einer Nahrungsmittel-Masse aus ein oder mehreren Zutaten, beschrieben. Das Küchengerät umfasst einen Behälter zur Aufnahme und ggf. zur Herstellung der Nahrungsmittel-Masse auf Basis der ein oder mehreren Zutaten. Außerdem umfasst das Küchengerät die in diesem Dokument beschriebene Steuereinheit. Das Küchengerät kann ggf. als eine (intelligente) Waage ausgebildet sein, die eingerichtet ist, Information in Bezug auf eine Zutat zu bestimmen, die mit der Waage abgewogen wird (und dann ggf. innerhalb einer weiteren Küchenmaschine weiterverarbeitet wird). Eine Küchenmaschine kann eingerichtet sein, mehrere Zutaten zu vermischen, um eine Nahrungsmittel-Masse herzustellen. Die Küchenmaschine kann dann ggf. eine integrierte Waage umfassen.

Im Weiteren wird die Erfindung anhand von in der beigefügten Zeichnung dargestellten Ausführungsbeispielen näher beschrieben. Dabei zeigen
- Figur 1: ein Blockdiagramm einer beispielhaften Küchenmaschine;
- Figur 2: einen beispielhaften Gewichtsverlauf beim Herstellen einer Nahrungsmittel-Masse;
- Figur 3: einen beispielhaften Widerstandsverlauf beim Herstellen einer Nahrungsmittel-Masse und
- Figur 4: ein Ablaufdiagramm eines beispielhaften Verfahrens zur Analyse bzw. zur Überwachung des Herstellungsprozess einer Nahrungsmittel-Masse.

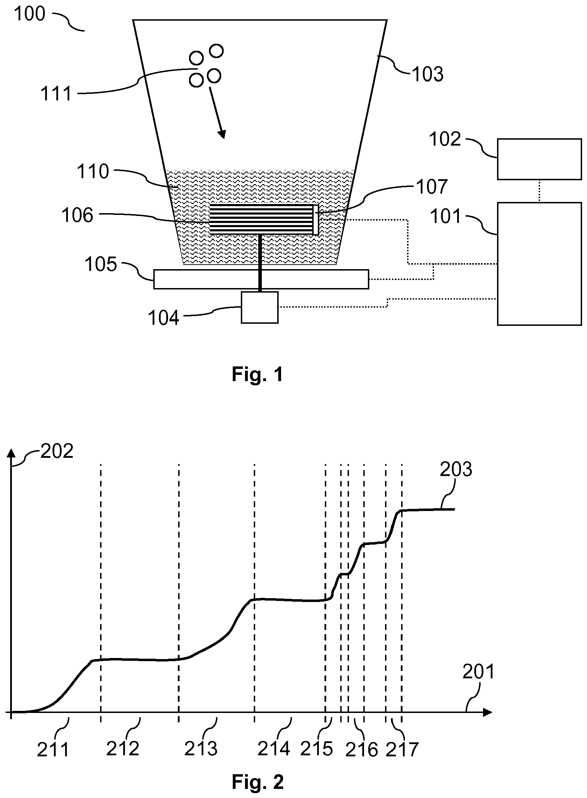

Wie eingangs dargelegt, befasst sich das vorliegende Dokument mit der effizienten und automatischen Bereitstellung von Information in Bezug auf eine, mithilfe eines Küchengeräts und insbesondere in einer Küchenmaschine hergestellten, Nahrungsmittel-Masse. In diesem Zusammenhang zeigt Fig. 1 ein Blockdiagramm einer Küchenmaschine 100 (als Beispiel für ein Küchengerät), die einen Behälter 103 für die Herstellung und für die Aufnahme einer Nahrungsmittel-Masse 110 umfasst. Die Küchenmaschine 100 umfasst eine Waage 105, die eingerichtet ist, Gewichtsdaten zu erfassen, die das Gewicht des Inhalts des Behälters 103 anzeigen. Außerdem umfasst die Küchenmaschine 110 typischerweise Mischmittel 104, 106, die eingerichtet sind, den Inhalt des Behälters 103 zu mischen, zu zerkleinern, zu kneten, zu rühren und/oder aufzuschäumen. Des Weiteren kann die Küchenmaschine 100 einen Kraftsensor 107 umfassen, der eingerichtet ist, Kraftdaten in Bezug auf die von den Mischmitteln 104, 106 aufgebrachten Kraft anzeigen.

Bei der Herstellung einer Nahrungsmittel-Masse 110 fügt ein Nutzer nach und nach Zutaten 111 in den Behälter 103. Die durch die Zugabe einer Zutat 111 verursachte Gewichtszunahme kann durch die Waage 105 erfasst werden. Eine Steuereinheit 101 der Küchenmaschine 100 kann eingerichtet sein, auf Basis der Gewichtsdaten einen zeitlichen Verlauf 203 des Gewichts 202 des Inhalts des Behälters 103 zu ermitteln. Fig. 2 zeigt einen beispielhaften Verlauf 203, der das Gewicht 202 des Inhalts des Behälters 103 als Funktion der Zeit 201 anzeigt.

Die Steuereinheit 101 kann weiter eingerichtet sein, einen zeitlichen Gewichtsverlauf 203 bei der Herstellung einer Nahrungsmittel-Masse 110 zu analysieren, um Information in Bezug auf die Nahrungsmittel-Masse 110 zu extrahieren und ggf. über eine Ausgabeeinheit 102 (z.B. über einen Bildschirm der Küchenmaschine 100 und/oder über ein persönliches elektronisches Gerät, insbesondere ein Smartphone, des Nutzers) auszugeben. Beispielhafte Information, die auf Basis des zeitlichen Gewichtsverlaufs 203 (und insbesondere auf Basis des (zeitabhängigen, punktuellen) Gradienten des Gewichtsverlaufs 203) extrahiert werden kann, ist:
- ein Typ der Zutat 111, die der Nahrungsmittel-Masse 110 zugeführt wurde (z.B. Mehl, Zucker, Ei, Butter, etc.);
- eine Menge einer Zutat 111, die der Nahrungsmittel-Masse 110 zugeführt wurde; und
- eine Reihenfolge der Zutaten 111, die der Nahrungsmittel-Masse 110 zugeführt wurden.

Im Rahmen der Analyse des zeitlichen Gewichtsverlaufs 203 (insbesondere im Rahmen der Analyse des Verlaufs des Gradienten des Gewichts) kann der Gewichtsverlauf 203 in eine Sequenz von Segmenten 211 bis 217 unterteilt werden. Insbesondere können Pausen-Segmente 212, 214 identifiziert werden, in denen über einen längeren Zeitraum keine Zutat 111 zugeführt wird. Es können somit Pausen-Segmente 212, 214 im Gewichtsverlauf 203 gesucht werden, in denen für eine bestimmte Mindestdauer keine Gewichtszunahme erfolgt. Die Pausen-Segmente 212, 214 zeigen typischerweise einen Wechsel von einem ersten Typ an Zutat 111 zu einem zweiten Typ an Zutat 111 an.

In den verbleibenden Segmenten 211, 213, 215, 216, 217 (auch als Zugabe-Segmente bezeichnet) erfolgt eine Gewichtszunahme, wobei die Eigenschaften (insbesondere der zeitliche Gradient) der Gewichtszunahme von dem Typ der zugeführten Zutat 111 abhängen. Beispielsweise weisen Zucker und Mehl typischerweise eine relativ gleichmäßige Gewichtszunahme auf (Segmente 211, 213), während die Zugabe eines Eis typischerweise mit einer relativ abrupten Gewichtszunahme einhergeht (Segmente 215, 216, 217).

Die einzelnen Segmente 211, 213, 215, 216, 217 eines Gewichtsverlaufs 203 können z.B. mittels eines Klassifikators einem Typ einer Zutat 111 zugewiesen werden. Zu diesem Zweck kann der Gewichtsverlauf 203 in einem Segment 211 durch ein oder mehrere Merkmale beschrieben werden. Beispielhafte Merkmale sind:
- ein (ggf. mittlere) Gradient des Gewichtsverlauf 203 in dem Segment 211;
- ein Ausmaß der Änderung des Gradienten des Gewichtsverlauf 203 in dem Segment 211; und/oder
- die absolute Gewichtszunahme in dem Segment 211.

Die Merkmale können zu einem mehr-dimensionalen Merkmalsvektor zusammengefasst werden, wobei der Merkmalsvektor die unterschiedlichen Merkmale als Dimensionen umfasst. Der Wert oder die Ausprägung des Merkmalsvektors beschreibt dann den Gewichtsverlauf 203 in einem Segment 211.

Es kann ein Maschinen-erlernter Klassifikator (z.B. basierend auf einem neuronalen Netzwerk und/oder basierend auf einer Support Vector Maschine, SVM) bereitgestellt werden, der eingerichtet ist, den möglichen mehr-dimensionalen Merkmalsraum des Merkmalsvektors in unterschiedliche Klassen für unterschiedliche Typen von Zutaten 111 aufzuteilen. Beispielsweise kann der Klassifikator eine Klasse für Mehl, eine Klasse für Zucker, eine Klasse für eine Flüssigkeit (z.B. Milch oder Wasser), eine Klasse für Eier, etc. bereitstellen.

Der Klassifikator kann auf Basis von Trainingsdaten mit einer Vielzahl von Trainings-Datensätzen angelernt worden sein. Dabei können die einzelnen Trainings-Datensätze jeweils einen tatsächlichen Wert des Merkmalsvektors (z.B. Beschreibung des Gewichtsverlaufs 203 eines Segments 211) und einen entsprechenden tatsächlichen Typ der zugeführten Zutat 111 anzeigen. Durch die Bereitstellung von Trainingsdaten mit einer relativ hohen Anzahl (z.B. mehr als 10000 bzw. 100000) von Trainings-Datensätzen (die den möglichen Merkmalsraum möglichst vollständig abdecken) kann ein robuster Klassifikator bereitgestellt werden.

Alternativ oder ergänzend kann der Klassifikator den Gewichtsverlauf 203 in einem Segment 211 mit Referenzverläufen für unterschiedliche Typen von Zutaten 111 vergleichen. Mit anderen Worten, der Klassifikator kann einen Muster-Erkennungsalgorithmus nutzen, um den Typ der Zutat 111 für ein Segment 211 eines Gewichtsverlaufs 203 zu ermitteln. Des Weiteren kann der Klassifikator für unterschiedlichen Typen von Zutaten 111 Wahrscheinlichkeitswerte angeben, die anzeigen, mit welcher Wahrscheinlichkeit ein Segment 211 eines Gewichtsverlaufs 203 den unterschiedlichen Typen von Zutaten 111 entsprechen. Es kann dann auf Basis der Wahrscheinlichkeitswerte bestimmt werden, welcher Typ von Zutat 111 in dem Segment 211 des Gewichtsverlaufs 203 in den Behälter 103 der Küchenmaschine 100 gegeben wurde.

Der Klassifikator kann z.B. innerhalb der Steuereinheit 101 einer Küchenmaschine 100 bereitgestellt werden. Bei der Herstellung einer aktuellen Nahrungsmittel-Masse 110 kann dann ein aktueller Gewichtsverlauf 203 ermittelt und in unterschiedliche Segmente 211-217 aufgeteilt werden. Anhand des Klassifikator können die Segmente 211, 213, 215, 216, 217 dann unterschiedlichen Typen von Zutaten 111 zugeordnet werden. Es kann dann einem Nutzer der Küchenmaschine 100 Information in Bezug auf die Herstellung der aktuellen Nahrungsmittel-Masse 110 bereitgestellt werden. Beispielsweise können die ermittelten Mengen und Typen von Zutaten 111 über eine Ausgabeeinheit 102 an einen Nutzer ausgegeben werden.

Der zeitliche Gewichtsverlauf 203 bei der Herstellung einer aktuellen Nahrungsmittel-Masse 110 kann somit anhand eines oder mehrerer (potentiell anpassungsfähiger und lernfähiger) statistischer Modelle ausgewertet werden. Dabei kann der zeitliche Verlauf 203 (insbesondere der Verlauf des Gradienten) der Gewichtszunahme ausgewertet werden, um zu bestimmen, welcher Typ von Zutat 111 in welchen Mengen zu der Nahrungsmittel-Masse 110 gegeben wurde.

Beispielsweise lässt sich die Zugabe von Eiern durch das relativ signifikante Gewicht eines Eis mit hoher Wahrscheinlichkeit erkennen. Als weiteres Beispiel lässt sich die Hinzugabe eines zähflüssigen Gemischs (z.B. Eischaum oder Sirup) von einem dünnflüssigen Gemisch (z.B. Milch) durch gemessene Vibrationen (z.B. Schwankungen im Gewichtsverlauf 203 und/oder Vibrationsdaten eines zusätzlichen Erschütterungssensors) differenzieren. Die Hinzugabe von Zucker, Mehl und Butter ist typischerweise ebenso durch den Verlauf der Gewichtszunahme (d.h. durch den Verlauf des Gradienten des Gewichts 202) bestimmbar (Butter führt z.B. aufgrund der Klumpen zu einem schrittweisen Anstieg des Gewichts 202; Zucker rieselt typsicherweise gleichmäßiger als Mehl und führt daher typischerweise zu einem konstanteren Verlauf des Gradienten des Gewichtsverlaufs 203 als Mehl).

Zusätzlich zu einer Gewichtsverlaufskurve 203 kann bei Vorliegen eines Rezeptes die absolute und/oder relative Menge (im Verhältnis zu den absoluten Mengen der anderen Zutaten) und die erwartete Reihenfolge laut Rezept berücksichtigt werden, um den Typ einer Zutat 111 zu bestimmen. Der Typ einer Zutat 111 kann somit auf Basis des Gewichtsverlaufs 203 und auf Basis eines Rezeptes für die herzustellende Nahrungsmittel-Masse 110 bestimmt werden. Beispielsweise können die möglichen Klassen des Klassifikators auf Basis des Rezepts ausgewählt und eingegrenzt werden. Des Weiteren können durch einen Abgleich von Mengenangaben aus einem Rezept mit dem gemessenen Gewichtsverlauf 203 die unterschiedlichen Typen von Zutaten 111 identifiziert werden.

Beispielsweise kann ein Nutzer spezifizieren (z.B. durch Eingabe an einer Nutzerschnittstelle der Küchenmaschine 100), welche Nahrungsmittel-Masse 110 hergestellt werden soll (z.B. Hefeteig für Pizza, Mürbeteig, Nudelteig, etc.). Die Eingabe kann an der Küchenmaschine 100 selbst erfolgen (über ein Touchscreen oder über ein Drehrad zur Auswahl von Rezepten). Alternativ oder ergänzend kann die Auswahl eines Rezepts über ein Smartphone bzw. Tablet-PC erfolgen, das über eine Kommunikationsverbindung (z.B. über eine Funkverbindung wie WLAN, Bluetooth, etc.) mit der Küchenmaschine verbunden ist.

Die Steuereinheit 101 kann eingerichtet sein, auf Basis des Gewichtsverlaufs 203 bei der Herstellung einer aktuellen Nahrungsmittel-Masse 110 ein aktuelles Rezept für die aktuelle Nahrungsmittel-Masse 110 zu identifizieren. Insbesondere können, wie oben dargelegt, die Typen und Mengen der Zutaten 111 sowie die Reihenfolge der Zugabe der Zutaten 111 bestimmt werden. Mittels dieser Information kann aus einer Datenbank zumindest ein Rezept für die aktuelle Nahrungsmittel-Masse 110 identifiziert werden. Die Steuereinheit 101 kann somit automatisch erkennen, welche Nahrungsmittel-Masse 110 aktuell in der Küchenmaschine 100 hergestellt wird. Es kann daraufhin eine Empfehlung an den Nutzer ausgegeben werden (in Bezug auf das identifizierte Rezept).

Die Steuereinheit 101 kann überprüfen, ob die erkannten Zutaten 111, deren Reihenfolge und/oder deren Menge mit einem (angegebenen oder automatisch identifizierten) Rezept übereinstimmen. In Reaktion auf das "Überprüfen" können dann ggf. Abweichungen an den Nutzer ausgegeben werden. Ein solches Feedback erlaubt es dem Nutzer, eventuelle Fehler zu korrigieren, um eine qualitativ hochwertige Nahrungsmitte-Masse 110 herzustellen. Des Weiteren kann die automatisch ermittelte Information über die hergestellte Nahrungsmittel-Masse 110 gespeichert und bei Bedarf ausgewertet werden (z.B. in einer Datenbank des Nutzers).

Es kann somit Information in Bezug auf einen Zubereitungsvorgang einer Nahrungsmittel-Masse 110 (insbesondere eines Teigs) aus dem zeitlichen Verlauf 203 der Gewichtsdaten extrahiert werden. Wird eine Zutat 111 hinzugeben, so kann mit statistischen Methoden automatisch bestimmt werden, um welchen Typ von Zutat 111 es sich wahrscheinlich handelt. Wenn die Information verfügbar ist, welches Rezept umgesetzt werden soll, lässt sich die Wahrscheinlichkeit der Erkennung von Zutaten 111 weiter erhöhen. So kann der Nutzer einer Küchenmaschine 100 bei der Zubereitung einer Nahrungsmittel-Masse 110 unterstützt werden. Beispielsweise kann automatisch überprüft werden, ob ein Rezept korrekt umgesetzt wird. Des Weiteren können automatisch Nutzungsdaten in Bezug auf eine Küchenmaschine 100 (z.B. in Bezug auf Essgewohnheiten) ermittelt und ggf. ausgewertet werden.

Wie in Fig. 1 dargestellt kann die Küchenmaschine 100 Mischmittel 104, 106 umfassen, die dazu verwendet werden können, die Zutaten 111 zu vermischen (und ggf. zu verkleinern), um eine Nahrungsmittel-Masse 110 herzustellen. Die Mischmittel 104, 106 können einen (elektrischen) Motor 104 umfassen, der ein Mischwerkzeug 106 (z.B. einen Knethaken, einen Rührbesen und/oder ein Messer) antreibt. Die Steuereinheit 101 kann eingerichtet sein, die Mischmittel 104, 106 anzusteuern. Des Weiteren kann die Steuereinheit 101 eingerichtet sein, Widerstandsdaten in Bezug auf einen mechanischen Widerstand zu erfassen, den das Mischwerkzeug 106 beim Bewegen der Nahrungsmittel-Masse 110 überwinden muss. Die Widerstandsdaten können z.B. anhand der elektrischen Leistung ermittelt werden, die der Motor 104 zum Antrieb des Mischwerkzeugs 106 benötigt (z.B. um das Mischwerkzeug 106 mit einer bestimmten Rotationsgeschwindigkeit zu drehen). Alternativ oder ergänzend kann die Küchenmaschine 100 einen Kraft-und/oder Widerstandssensor 107 umfassen, der eingerichtet ist, den durch die Nahrungsmittel-Masse 110 verursachten Widerstand zu messen.

Die Steuereinheit 101 ist eingerichtet, auf Basis der Widerstandsdaten Information in Bezug auf die Nahrungsmittel-Masse 110 zu ermitteln. Beispielsweise kann die Viskosität der Nahrungsmittel-Masse 110 bestimmt werden.

Die Steuereinheit 101 kann eingerichtet sein, zu erkennen, welches Mischwerkzeug 106 (z.B. ein Knethaken oder ein Rührbesen) verwendet wird. Zu diesem Zweck können z.B. ein RFID Tag am Mischwerkzeug 106 und/oder eine Kodierung der Kontakte der Mischwerkzeuge 106 und/oder eine Werkzeug-spezifische Steckverbindung verwendet werden, die es der Steuereinheit 101 ermöglichen, das Mischwerkzeug 106 aus einer Mehrzahl von möglichen Mischwerkzeugen 106 zu ermitteln, das für einen Mischvorgang verwendet wird. Die Information in Bezug auf die hergestellte Nahrungsmittel-Masse 110 kann dann auch in Abhängigkeit von dem angeschlossenen Mischwerkzeug 106 ermittelt werden. Insbesondere können die Widerstandsdaten unter Berücksichtigung des verwendeten Mischwerkzeugs 106 ausgewertet werden.

Wie bereits oben dargelegt kann die Steuereinheit 101 ein Rezept ermitteln, nach dem die Nahrungsmittel-Masse 110 im Behälter 103 der Küchenmaschine (wahrscheinlich) hergestellt wird. Die Steuereinheit 101 kann auf Basis der Widerstandsdaten in unterschiedlichen Phasen eines Rezeptes überprüfen bzw. erkennen, ob eine (aufgrund des Rezeptes) erwartete Kraft mit der gemessenen Kraft übereinstimmt. Ist beispielsweise die hinzugefügte Flüssigkeitsmenge nicht korrekt, ändert sich die Konsistenz der Nahrungsmittel-Masse 110. Außerdem kann erkannt werden, ob die Reihenfolge der zugefügten Zutaten 111 korrekt ist. Die ermittelte Information kann als Feedback über eine Ausgabeeinheit 102 an einen Nutzer der Küchenmaschine 100 ausgegeben werden. Des Weiteren kann Information in Bezug auf die hergestellte Nahrungsmittel-Masse 110 gespeichert und ggf. ausgewertet werden. Außerdem kann durch die Überwachung der Widerstandskraft von Nahrungsmittel-Massen 110 eine Überbeanspruchung der Küchenmaschine 100 überwacht werden, um die Lebensdauer der Küchenmaschine 100 zu erhöhen.

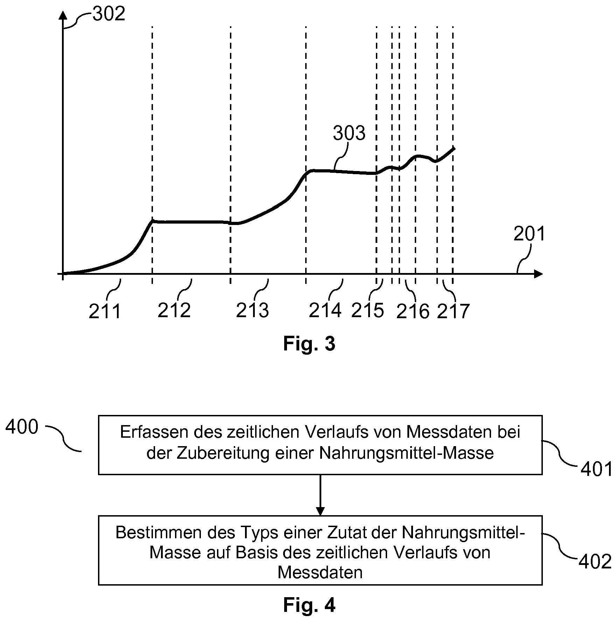

Die Mischmittel 104, 106 werden häufig über einen längeren Zeitraum bei der Herstellung einer Nahrungsmittel-Masse 110 aktiviert. Insbesondere können die Mischmittel 104, 106 auch während der Zugabe von Zutaten 111 in den Behälter 103 aktiviert sein. Es kann somit ein zeitlicher Verlauf der durch die Nahrungsmittel-Masse 110 bewirkten Widerstandskraft ermittelt werden. Fig. 3 zeigt einen beispielhaften Verlauf 303 der Widerstandskraft 302 als Funktion der Zeit 201. Der Widerstandsverlauf 303 aus Fig. 3 wurde für den gleichen Herstellungsprozess wie der Gewichtsverlauf 203 aus Fig. 2 erfasst. In analoger Weise wie der Gewichtsverlauf 203 kann auch der Widerstandsverlauf 303 (alternativ oder ergänzend) dazu verwendet werden, Information in Bezug auf eine hergestellte Nahrungsmittel-Masse 110 (z.B. den Typ einer zugeführten Zutat 111 und/oder die Menge einer zugeführten Zutat 111) zu ermitteln. Zu diesem Zweck kann der Widerstandsverlauf 303 segmentiert werden (z.B. in Abhängigkeit von der Steigung bzw. von dem Gradienten des Widerstandsverlaufs 303). Die einzelnen Segmente 211 bis 217 des Widerstandsverlaufs 303 können dann durch Merkmale beschrieben werden, die in einen Merkmalsvektor aufgenommen werden können. Es kann dann wiederum ein Klassifikator verwendet werden, um auf Basis des Wertes eines Merkmalsvektors Information in Bezug die Nahrungsmittel-Masse 110 (z.B. den Typ einer zugefügten Zutat 111) zu ermitteln. So kann die Genauigkeit der ermittelten Information weiter erhöht werden.

Der Widerstandsverlauf 303 kann auch dazu verwendet werden, die Reihenfolge der zugefügten Zutaten 111 zu ermitteln und ggf. mit einer vorgegebenen Reihenfolge eines Rezeptes zu vergleichen. So kann die Herstellung einer Nahrungsmittel-Masse 110 in zuverlässiger Weise überwacht werden.

Die Messung von Kräften bzw. Widerständen beim Antrieb eines Werkzeugs 106 einer Küchenmaschine 100 erlaubt eine detaillierte Analyse des Zubereitungsvorgangs einer Nahrungsmittel-Masse 110. Basierend auf der Analyse können Rückmeldungen und insbesondere Tipps an einen Nutzer der Küchenmaschine 100 ausgegeben werden (z.B. in Bezug auf die Konsistenz der Nahrungsmittel-Masse 110, in Bezug auf die Reihenfolge der Zugabe der Zutaten 111, etc.).

Fig. 4 zeigt ein Ablaufdiagramm eines beispielhaften Verfahrens 400 zur Überwachung bzw. zur Analyse eines Herstellungsprozesses einer Nahrungsmittel-Masse 110 in einem Behälter 103 einer Küchenmaschine 100. Das Verfahren 400 umfasst das Erfassen 401 eines zeitlichen Verlaufs 203, 303 von Messdaten während des Herstellungsprozesses. Dabei zeigen die Messdaten zumindest eine Eigenschaft (insbesondere das Gewicht 202 und/oder die Widerstandskraft 302) der Nahrungsmittel-Masse 110 in dem Behälter 103 der Küchenmaschine 100 an. Es kann somit ein zeitlicher Verlauf 203 von Gewichtsdaten und/oder ein zeitlicher Verlauf 303 von Widerstandsdaten ermittelt werden.

Außerdem umfasst das Verfahren 400 das Bestimmen 402, auf Basis des zeitlichen Verlaufs 203, 303 von Messdaten, von Information in Bezug auf zumindest eine Zutat 111, die während des Herstellungsprozesses in den Behälter 103 gegeben wurde. Das Bestimmten 402 erfolgt dabei insbesondere auf Basis des Gradienten des zeitlichen Verlaufs 203, 303 von Messdaten. Dabei kann analysiert werden, wie sich der Gradient des zeitlichen Verlaufs 203, 303 von Messdaten während des Herstellungsprozesses verändert, um die Information in Bezug auf zumindest eine Zutat 111 zu bestimmen. Insbesondere kann dabei der jeweilige Typ von zugegebenen Zutaten 111 aus dem zeitlichen Verlauf 203, 303 von Messdaten (bzw. aus dem Gradienten des zeitlichen Verlaufs 203, 303) bestimmt werden. So kann (insbesondere bei Vergleich der ermittelten Information mit Soll-Daten aus einem Rezept für die Nahrungsmittel-Masse 110) der Herstellungsprozess einer Nahrungsmittel-Masse 110 in zuverlässiger und effizienter Weise überwacht werden.

## Patentansprüche

1. Verfahren (400) zur Überwachung eines Herstellungsprozesses einer Nahrungsmittel-Masse (110), wobei das Verfahren (400) umfasst,
- Erfassen (401) eines zeitlichen Verlaufs (203, 303) von Messdaten während des Herstellungsprozesses; wobei die Messdaten zumindest eine Eigenschaft der Nahrungsmittel-Masse (110) in einem Behälter (103) eines Küchengeräts (100) anzeigen;
- Bestimmen (402) von Information in Bezug auf zumindest eine Zutat (111) zur Herstellung der Nahrungsmittel-Masse (110), die während des Herstellungsprozesses in den Behälter (103) gegeben wurde; wobei die Information in Bezug auf die zumindest eine Zutat (111) auf Basis eines zeitlichen Verlaufs eines Gradienten des zeitlichen Verlaufs (203, 303) von Messdaten und auf Basis einer Frequenzanalyse zumindest eines zeitlichen Segments (211, 212, 213) des zeitlichen Verlaufs (203, 303) von Messdaten ermittelt wird; und
- Ausgabe der Information in Bezug auf die zumindest eine Zutat (111) an einen Nutzer des Küchengeräts (100), um den Nutzer bei der Herstellung der Nahrungsmittel-Masse (110) zu unterstützen.

2. Verfahren (400) gemäß Anspruch 1, wobei der zeitliche Verlauf (203, 303) von Messdaten
- Information in Bezug auf einen zeitlichen Verlauf (203) des Gewichts (202) der Nahrungsmittel-Masse (110) während des Herstellungsprozesses anzeigt;
- Information in Bezug auf einen zeitlichen Verlauf von Vibrationen anzeigt, die durch die Nahrungsmittel-Masse (110), insbesondere durch Zugabe einer Zutat (111) in den Behälter (103), verursacht werden; und/oder
- Information in Bezug auf einen zeitlichen Verlauf (303) der Widerstandskraft (302) anzeigt, die während des Herstellungsprozesses von der Nahrungsmittel-Masse (110) an einem Mischwerkzeug (106) des Küchengeräts (100) bewirkt wird.

3. Verfahren (400) gemäß einem der vorhergehenden Ansprüche, wobei
- das Verfahren (400) umfasst, Aufteilen des zeitlichen Verlaufs (203, 303) von Messdaten in eine Mehrzahl von zeitlichen Segmenten (211, 212, 213), so dass die Mehrzahl von Segmenten (211, 212, 213) zumindest ein Zugabe-Segment (211, 213) umfasst, in dem eine Zugabe einer Zutat (111) zu dem Behälter (103) erfolgt ist, und so dass die Mehrzahl von Segmenten (211, 212, 213) zumindest ein Pausen-Segment (212) umfasst, in dem keine Zutat (111) zu dem Behälter (103) gegeben wurde; und
- die Information in Bezug auf die zumindest eine Zutat (111) auf Basis des zumindest einen Zugabe-Segments (211, 213) bestimmt wird.

4. Verfahren (400) gemäß Anspruch 3, wobei
- die Information in Bezug auf die zumindest eine Zutat (111) einen Typ von Zutat (111) aus einer Vielzahl von unterschiedlichen Typen von Zutaten (111) umfasst; und
- das zumindest eine Zugabe-Segment (211, 213) des zeitlichen Verlaufs (203, 303) von Messdaten analysiert wird, um zu bestimmen, welcher Typ von Zutat (111) während des zumindest einen Zugabe-Segments (211, 213) in den Behälter (103) gegeben wurde.

5. Verfahren (400) gemäß einem der vorhergehenden Ansprüche, wobei
- die Information in Bezug auf die zumindest eine Zutat (111) einen Typ von Zutat (111) aus einer Vielzahl von unterschiedlichen Typen von Zutaten (111) umfasst;
- das Verfahren (400) umfasst, Ermitteln eines Wertes eines Merkmalsvektors für ein zeitliches Segment (211) des zeitlichen Verlaufs (203, 303) von Messdaten;
- der Merkmalsvektor eine Mehrzahl von Merkmalen umfasst;
- ein Merkmal auf Basis des zeitlichen Segments (211) des zeitlichen Verlaufs (203, 303) von Messdaten ermittelt wird, um eine Eigenschaft des zeitlichen Verlaufs (203, 303) von Messdaten in dem zeitlichen Segment (211) zu beschreiben;
- Bestimmen eines Typs einer Zutat (111), die in dem zeitlichen Segment (211) in den Behälter (103) gegeben wurde, auf Basis eines Klassifikators und auf Basis des Wertes des Merkmalsvektors; und
- der Klassifikator eingerichtet ist, einen Merkmalsraum von möglichen Werten des Merkmalsvektors auf die Vielzahl von unterschiedlichen Typen von Zutaten (111) aufzuteilen.

6. Verfahren (400) gemäß Anspruch 5, wobei der Klassifikator
- einen Maschinen-erlernten Klassifikator umfasst;
- ein neuronales Netzwerk und/oder eine Support Vector Machine umfasst; und/oder
- auf Basis von Trainingsdaten von tatsächlichen Herstellungsprozessen angelernt wurde.

7. Verfahren (400) gemäß einem der Ansprüche 5 bis 6, wobei die Merkmale ein oder mehrere umfassen,
- einen Gradienten des zeitlichen Verlaufs (203, 303) von Messdaten in dem zeitlichen Segment (211);
- ein Ausmaß an Änderungen des Gradienten des zeitlichen Verlaufs (203, 303) von Messdaten in dem zeitlichen Segment (211);
- eine Differenz eines Wertes der Messdaten an einem Anfang und an einem Ende des zeitlichen Segments (211);
- eine Häufigkeit von Änderungen des Gradienten des zeitlichen Verlaufs (203, 303) von Messdaten in dem zeitlichen Segment (211); und/oder
- eine Eigenschaft eines Frequenzspektrums des zeitlichen Verlaufs (203, 303) von Messdaten in dem zeitlichen Segment (211).

8. Verfahren (400) gemäß einem der vorhergehenden Ansprüche, wobei das Verfahren (400) umfasst,
- Ermitteln eines Rezeptes für den Herstellungsprozess der Nahrungsmittel-Masse (110);
- Vergleichen der Information in Bezug auf die zumindest eine Zutat (111) mit dem Rezept; und
- Ausgeben einer Rückmeldung an einen Nutzer des Küchengeräts (110) in Abhängigkeit von dem Vergleich.

9. Verfahren (400) gemäß Anspruch 8, wobei die Information in Bezug auf die
zumindest eine Zutat (111) auch in Abhängigkeit von dem Rezept bestimmt wird.

10. Verfahren (400) gemäß einem der vorhergehenden Ansprüche, wobei die Information in Bezug auf die zumindest eine Zutat (111) ein oder mehrere umfasst,
- einen Typ einer Zutat (111), die während des Herstellungsprozesses in den Behälter (103) gegeben wurde;
- eine Wahrscheinlichkeit, mit der der Typ einer Zutat (111) erkannt wurde;
- eine Menge einer Zutat (111), die während des Herstellungsprozesses in den Behälter (103) gegeben wurde; und/oder
- eine Reihenfolge, in der während des Herstellungsprozesses Zutaten (111) in den Behälter (103) gegeben wurden.

11. Verfahren (400) gemäß einem der vorhergehenden Ansprüche, wobei das Bestimmen (402) von Information in Bezug auf zumindest eine Zutat (111) umfasst, Erkennen eines typischen Musters für einen bestimmten Typ von Zutat (111) in einem zeitlichen Segment (211) des zeitlichen Verlaufs (203, 303) von Messdaten.

12. Verfahren (400) gemäß einem der vorhergehenden Ansprüche, wobei
- die Messdaten Widerstandsdaten in Bezug auf eine Widerstandskraft (302) umfassen, die von der Nahrungsmittel-Masse (110) an einem Mischwerkzeug (106) des Küchengeräts (100) bewirkt wird;
- das Küchengerät (100) eingerichtet ist, unterschiedliche Typen von Mischwerkzeugen (106) aufzunehmen;
- das Verfahren (400) umfasst, Ermitteln des Typs von Mischwerkzeug (106), das im Herstellungsprozess der Nahrungsmittel-Masse (110) verwendet wird; und
- die Information in Bezug auf die zumindest eine Zutat (111) auch in Abhängigkeit von dem Typ des verwendeten Mischwerkzeugs (106) bestimmt wird.

13. Steuereinheit (101) für eine Küchenmaschine (100), wobei die Steuereinheit (101) eingerichtet ist,
- während eines Herstellungsprozesses einer Nahrungsmittel-Masse (110) in einem Behälter (103) der Küchenmaschine (100) einen zeitlichen Verlauf (203, 303) von Messdaten zu ermitteln; wobei die Messdaten zumindest eine Eigenschaft der Nahrungsmittel-Masse (110) in dem Behälter (103) der Küchenmaschine (100) anzeigen;
- Information in Bezug auf zumindest eine Zutat (111) zur Herstellung der Nahrungsmittel-Masse (110) zu ermitteln, die während des Herstellungsprozesses in den Behälter (103) gegeben wurde; wobei die Information in Bezug auf die zumindest eine Zutat (111) auf Basis eines zeitlichen Verlaufs eines Gradienten des zeitlichen Verlaufs (203, 303) von Messdaten und auf Basis einer Frequenzanalyse zumindest eines zeitlichen Segments (211, 212, 213) des zeitlichen Verlaufs (203, 303) von Messdaten ermittelt wird; und
- Ausgabe der Information in Bezug auf die zumindest eine Zutat (111) an einen Nutzer der henmaschine (100), um den Nutzer bei der Herstellung der Nahrungsmittel-Masse (110) zu unterstützen.

14. Küchenmaschine (100) zur Herstellung einer Nahrungsmittel-Masse (110) aus einer Mehrzahl von Zutaten (110), wobei die Küchenmaschine (100) umfasst,
- einen Behälter (103) zur Herstellung der Nahrungsmittel-Masse (110) auf Basis der Mehrzahl von Zutaten (110); und
- eine Steuereinheit (101) gemäß Anspruch 13.

## Claims

1. Method (400) for monitoring a manufacturing process for a food mass (110), wherein the method (400) comprises
- detecting (401) a temporal course (203, 303) of measurement data during the manufacturing process; wherein the measurement data indicates at least one property of the food mass (110) in a container (103) of a kitchen appliance (100);
- determining (402) information in respect of at least one ingredient (111) for manufacturing the food mass (110) which was added to the container (103) during the manufacturing process; wherein the information in respect of the at least one ingredient (111) is determined on the basis of a temporal course of a gradient of the temporal course (203, 303) of measurement data and on the basis of a frequency analysis of at least one time segment (211, 212, 213) of the temporal course (203, 303) of measurement data; and
- outputting information in respect of the at least one ingredient (111) to a user of the kitchen appliance (100) in order to support the user when the food mass (110) is being manufactured.

2. Method (400) according to claim 1, wherein the temporal course (203, 303) of measurement data
- indicates information in respect of a temporal course (203) of the weight (202) of the food mass (110) during the manufacturing process;
- indicates information in respect of a temporal course of vibrations, which are caused by the food mass (110), in particular when an ingredient (111) is added to the container (103), and/or
- indicates information in respect of a temporal course (303) of the resistance (302), which is effected during the manufacturing process of the food mass (110) on a mixing tool (106) of the kitchen appliance (100).

3. Method (400) according to one of the preceding claims, wherein
- the method (400) comprises allocating the temporal course (203, 303) of measurement data into a plurality of time segments (211, 212, 213) so that the plurality of segments (211, 212, 213) comprises at least one adding segment (211, 213), in which an ingredient (111) is added to the container (103) and the plurality of segments (211, 212, 213) thus comprises at least one pause segment (212) in which no ingredient (111) was added to the container (103); and
- the information in respect of the at least one ingredient (111) is determined on the basis of the at least one adding segment (211, 213).

4. Method (400) according to claim 3, wherein
- the information in respect of the at least one ingredient (111) comprises a type of ingredient (111) from a plurality of different types of ingredient (111); and
- the at least one adding segment (211, 213) of the temporal course (203, 303) of measurement data is analysed in order to determine which type of ingredient (111) was added to the container (103) during the at least one adding segment (211, 213).

5. Method (400) according to one of the preceding claims, wherein
- the information in respect of the at least one ingredient (111) comprises a type of ingredient (111) from a plurality of different types of ingredient (111);
- the method (400) comprises determining a value of a feature vector for a time segment (211) of the temporal course (203, 303) of measurement data;
- the feature vector comprises a plurality of features;
- a feature is determined on the basis of the time segment (211) of the temporal course (203, 303) of measurement data, in order to describe a property of the temporal course (203, 303) of measurement data in the time segment (211);
- determining a type of ingredient (111), which was added to the container (103) in the second time segment (211), on the basis of a classifier and on the basis of the value of the feature vector; and
- the classifier is designed to allocate a feature space of possible values of the feature vector onto a plurality of different types of ingredients (111).

6. Method (400) according to claim 5, wherein the classifier
- comprises a machine learning classifier;
- comprises a neural network and/or a support vector machine, and/or
- was learned on the basis of training data from real manufacturing processes.

7. Method (400) according to one of claims 5 to 6, wherein the features comprise one or more
- a gradient of the temporal course (203, 303) of measurement data in the time segment (211);
- a degree of changes to the gradient of the temporal course (203, 303) of measurement data in the time segment (211);
- a difference in a value of the measurement data at a start and at an end of the time segment (211);
- a frequency of changes to the gradient of the temporal course (203, 303) of measurement data in the time segment (211); and/or
- a property of a frequency spectrum of the temporal course (203, 303) of measurement data in the time segment (211).

8. Method (400) according to one of the preceding claims, wherein the method (400) comprises
- determining a recipe for the manufacturing process of the food mass (110);
- comparing the information in respect of the at least one ingredient (111) with the recipe; and
- outputting an item of feedback to a user of the kitchen appliance (110) as a function of the comparison.

9. Method (400) according to claim 8, wherein the information in respect of the at least one ingredient (111) is also determined as a function of the recipe.

10. Method (400) according to one of the preceding claims, wherein the information in respect of the at least one ingredient (111) comprises one or more
- a type of ingredient (111) which was added to the container (103) during the manufacturing process;
- a probability with which the type of ingredient (111) was identified;
- a quantity of ingredient (111) which was added to the container (103) during the manufacturing process; and/or
- a sequence in which ingredients (111) were added to the container (103) during the manufacturing process.

11. Method (400) according to one of the preceding claims, wherein the determination (402) of information in respect of at least one ingredient (111) comprises identifying a typical pattern for a specific type of ingredient (111) in a time segment (211) of the temporal course (203, 303) of measurement data.

12. Method (400) according to one of the preceding claims, wherein
- the measurement data comprises resistance data in respect of a resistance (302), which is effected by the food mass (110) on a mixing tool (106) of the kitchen appliance (100);
- the kitchen appliance (100) is designed to receive different types of mixing tools (106);
- the method (400) comprises determining the type of mixing tool (106) which is used in the manufacturing process of the food mass (110); and
- the information in respect of the at least one ingredient (111) is also determined as a function of the type of mixing tool (106) used.

13. Control unit (101) for a kitchen appliance (100), wherein the control unit (101) is designed
- to determine a temporal course (203, 303) of measurement data during a manufacturing process of a food mass (110) in a container (103) of the kitchen appliance (100); wherein the measurement data indicates at least one property of the food mass (110) in the container (103) of the kitchen appliance (100);
- to determine information in respect of at least one ingredient (111) for manufacturing the food mass (110) which was added to the container (103) during the manufacturing process; wherein the information in respect of the at least one ingredient (111) is determined on the basis of a temporal course of a gradient of the temporal course (203, 303) of measurement data and on the basis of a frequency analysis of at least one time segment (211, 212, 213) of the temporal course (203, 303) of measurement data; and
- outputting the information in respect of the at least one ingredient (111) to a user of the kitchen appliance (100), in order to support the user during the manufacture of the food mass (110).

14. Kitchen appliance (100) for manufacturing a food mass (110) from a plurality of ingredients (110), wherein the kitchen appliance (100) comprises
- a container (103) for manufacturing the food mass (110) on the basis of the plurality of ingredients (110); and
- a control unit (101) according to claim 13.

## Revendications

1. Procédé (400) de surveillance du processus de préparation d'une masse alimentaire (110), dans lequel le procédé (400) comprend :
- l'évaluation (401) d'un écoulement dans le temps (203, 303) de données de mesure pendant le processus de préparation, les données de mesure indiquant au moins une propriété de la masse alimentaire (110) dans le récipient (103) d'un appareil de cuisine (100) ;
- la détermination (402) d'informations en rapport avec au moins un ingrédient (111) nécessaire à la préparation de la masse alimentaire (110), lequel a été ajouté dans le récipient (103) pendant le processus de préparation ; les informations en rapport avec le au moins un ingrédient (111) étant détectées sur base d'un écoulement dans le temps d'un gradient de l'écoulement dans le temps (203, 303) de données de mesure et sur base d'une analyse de fréquence d'au moins un segment temporel (211, 212, 213) de l'écoulement dans le temps (203, 303) de données de mesure ; et
- la sortie des informations en rapport avec le au moins un ingrédient (111) à destination d'un utilisateur de l'appareil de cuisine (100) pour assister l'utilisateur dans sa préparation de la masse alimentaire (110).

2. Procédé (400) selon la revendication 1, dans lequel l'écoulement dans le temps (203, 303) des données de mesure
- indique des informations relatives à un écoulement dans le temps (203) du poids (202) de la masse alimentaire (110) pendant le processus de préparation :
- indique des informations relatives à un écoulement de vibrations dans le temps qui sont causées par la masse alimentaire (110), en particulier par l'addition d'un ingrédient (111) dans le récipient (103) ; et/ou
- indique des informations relatives à un écoulement dans le temps (303) de la puissance de résistance (302) qui est activée pendant le processus de préparation de la masse alimentaire (110) sur un ustensile de mélange (106) de l'appareil de cuisine (100).

3. Procédé (400) selon l'une des revendications précédentes, dans lequel
- le procédé (400) comprend la répartition de l'écoulement dans le temps (203, 303) de données de mesure en une pluralité de segments temporels (211, 212, 213) de sorte que la pluralité de segments (211, 212, 213) comprend au moins un segment d'addition (211 ; 213), dans lequel a lieu l'addition d'un ingrédient (111) au récipient (103) et de sorte que la pluralité de segments (211, 212, 213) comprend au moins un segment de pause (212) pendant lequel aucun ingrédient (111) n'a été ajouté au récipient (103) ; et
- détermine les informations en rapport avec le au moins un ingrédient (111) sur base du au moins un segment d'addition (211, 213).

4. Procédé (400) selon la revendication 3, dans lequel
- les informations relatives au au moins un ingrédient (111) comprennent un type d'ingrédient (111) parmi une pluralité de différents types d'ingrédients (111) ; et
- le au moins un segment d'addition (211, 213) de l'écoulement dans le temps (203, 303) de données de mesure est analysé pour déterminer quel type d'ingrédient (111) est ajouté dans le récipient (103) pendant le au moins un segment d'addition (211, 213).

5. Procédé (400) selon l'une des revendications précédentes, dans lequel
- les informations relatives au au moins un ingrédient (111) comprennent un type d'ingrédient (111) parmi une pluralité de différents types d'ingrédients (111) ;
- le procédé (400) comprend la détection de la valeur d'un vecteur de caractéristique pour un segment temporel (211) de l'écoulement dans le temps (203, 303) de données de mesure ;
- le vecteur de caractéristique comprend une pluralité de caractéristiques ;
- une caractéristique se basant sur le segment temporel (211) de l'écoulement dans le temps (203, 303) de données de mesure est détectée pour décrire une propriété de l'écoulement dans le temps (203, 303) de données de mesure dans le segment temporel (211) ;
- la détermination d'un type d'ingrédient (111) qu'on a ajouté dans le récipient (103) pendant le segment temporel (211), se basant sur un classifieur et se basant sur la valeur du vecteur de caractéristique ; et
- le classifieur est prévu pour répartir un espace de caractéristiques de valeurs possibles du vecteur de caractéristique, sur une pluralité de différents types d'ingrédients (111).

6. Procédé (400) selon la revendication 5, dans lequel le classifieur
- comprend un classifieur d'apprentissage par auto-adaptation ;
- comprend un réseau neuronal et/ou une machine à vecteurs de support; et/ou
- est instruit sur base de données d'apprentissage de processus de préparation déjà réalisés.

7. Procédé (400) selon l'une des revendications 5 à 6, dans lequel les caractéristiques comprennent l'un ou plusieurs des suivants :
- un gradient de l'écoulement dans le temps (203, 303) de données de mesure dans le segment temporel (211) ;
- une étendue des modifications du gradient de l'écoulement dans le temps (203, 303) de données de mesure dans le segment temporel (211) ;
- une différence d'une valeur des données de mesure au début et à la fin du segment temporel (211) ;
- une fréquence des modifications du gradient de l'écoulement dans le temps (203, 303) de données de mesure dans le segment temporel (211) ; et/ou
- une propriété d'un spectre de fréquences de l'écoulement dans le temps (203, 303) de données de mesure dans le segment temporel (211).

8. Procédé (400) selon l'une des revendications précédentes, dans lequel le procédé (400) comprend :
- la détection d'une recette pour le processus de préparation de la masse alimentaire (110) ;
- la comparaison des informations relatives au au moins un ingrédient (111) avec la recette ; et
- la sortie d'un message de réponse à un utilisateur de l'appareil de cuisine (110) en fonction de la comparaison.

9. Procédé (400) selon la revendication 8, dans lequel les informations relatives au au moins un ingrédient (111) sont déterminées également en fonction de la recette.

10. Procédé (400) selon l'une des revendications précédentes, dans lequel les informations relatives au au moins un ingrédient (111) comprennent l'un ou plusieurs des suivants :
- un type d'ingrédient (111), qu'on ajoute dans le récipient (103) pendant le processus de préparation ;
- un critère de vraisemblance par lequel le type d'ingrédient (111) a été reconnu ;
- une quantité d'ingrédient (111) qu'on a ajoutée dans le récipient (103) pendant le processus de préparation ; et/ou
- une séquence avec laquelle les ingrédients (111) ont été ajoutés dans le récipient (103) pendant le processus de préparation.

11. Procédé (400) selon l'une des revendications précédentes, dans lequel la détermination (402) des informations relatives à au moins un ingrédient (111) comprend la reconnaissance d'un échantillon typique pour un type déterminé d'ingrédient (111) dans un segment temporel (211) de l'écoulement dans le temps (203, 303) de données de mesure.

12. Procédé (400) selon l'une des revendications précédentes, dans lequel
- les données de mesure comprennent des données de résistance en rapport avec une force de résistance (302) active de la masse alimentaire (110) sur un ustensile de mélange (106) de l'appareil de cuisine (100) ;
- l'appareil de cuisine (100) est prévu pour prendre en charge différents types d'ustensiles de mélange (106) ;
- le procédé (400) comprend la détection du type d'ustensile de mélange (106) utilisé lors du processus de préparation de la masse alimentaire (110) ; et
- les informations relatives au au moins un ingrédient (111) sont déterminées également en fonction du type d'ustensile de mélange utilisé (106).

13. Unité de commande (101) pour un robot ménager (100), dans laquelle l'unité de commande (101) est prévue,
- pour détecter, pendant le processus de préparation d'une masse alimentaire (110) dans un récipient (103) du robot ménager (100), un écoulement dans le temps (203, 303) de données de mesure, les données de mesure indiquant au moins une propriété de la masse alimentaire (110) dans le récipient (103) du robot ménager (100) ;
- pour détecter des informations en rapport avec au moins un ingrédient (111) nécessaire à la préparation de la masse alimentaire (110), lequel a été ajouté dans le récipient (103) pendant le processus de préparation, les informations en rapport avec le au moins un ingrédient (111) étant détectées sur base d'un écoulement dans le temps d'un gradient de l'écoulement dans le temps (203, 303) de données de mesure et sur base d'une analyse de fréquence d'au moins un segment temporel (211, 212, 213) de l'écoulement dans le temps (203, 303) de données de mesure ; et
- pour sortir des informations relatives au au moins un ingrédient (111) à destination d'un utilisateur du robot ménager (100) pour assister l'utilisateur dans sa préparation de la masse alimentaire (110).

14. Robot ménager (100) destiné à la préparation d'une masse alimentaire (110) à partir d'une pluralité d'ingrédients (110), dans lequel le robot ménager (100) comprend :
- un récipient (103) de préparation de la masse alimentaire (110) sur base de la pluralité d'ingrédients (110) ; et
- une unité de commande (101) selon la revendication 13.
